# FASCICULE DE BREVET EUROPEEN

(11) **EP 4 196 713 B1**
(45) Date de publication et mention de la délivrance du brevet: **14.02.2024**
(21) Numéro de dépôt: 21773621.4
(22) Date de dépôt: 14.09.2021
(51) Int. Cl.: F16L 47/22

(54) **CONDUITE DE FLUIDE POUR AÉRONEF COMPRENANT UNE CANALISATION THERMOPLASTIQUE ET UN CONNECTEUR**
FLUIDLEITUNG FÜR LUFTFAHRZEUG, UMFASSEND EIN THERMOPLASTISCHES ROHR UND EINEN STECKVERBINDER
FLUID CONDUIT FOR AIRCRAFT, COMPRISING A THERMOPLASTIC PIPE AND A CONNECTOR

(30) Priorité: 05.10.2020 FR 2010157
(43) Date de publication de la demande: 21.06.2023
(73) Titulaire: Airbus Atlantic, 17300 Rochefort (FR)
(72) Inventeur: PERHERIN, Daniel, 44600 SAINT-NAZAIRE (FR); BOULZE, Daniel, 31840 AUSSONNE (FR)
(74) Mandataire: Argyma
(86) Numéro de dépôt international: PCT/EP2021/075150
(87) Numéro de publication internationale: WO 2022/073723

(56) Documents cités:
- EP-A1- 0 530 387
- EP-A1- 3 628 907
- WO-A1-99/19658

## Description

### Domaine technique

La présente invention concerne le domaine des circuits de fluides dans un aéronef, par exemple un circuit d'eau potable, d'eaux usées, de drainage, etc. De manière connue, un circuit de fluide dans un aéronef comporte une pluralité de conduites reliées à la structure de l'aéronef et connectées ensemble par des raccords de liaison. De manière connue, chaque conduite comporte une canalisation, rectiligne ou cintrée, dont les extrémités sont équipées d'un connecteur afin de permettre une liaison robuste et étanche avec un raccord de liaison.

Afin d'alléger la masse d'un aéronef, les canalisations sont de plus en plus fabriquées dans un matériau thermoplastique, et plus particulièrement dans un polymère connu sous la désignation PEEK (signifiant polyétheréthercétone), qui permet la fabrication de canalisations semi-rigides, légères et robustes. Une telle canalisation présente également une épaisseur faible.

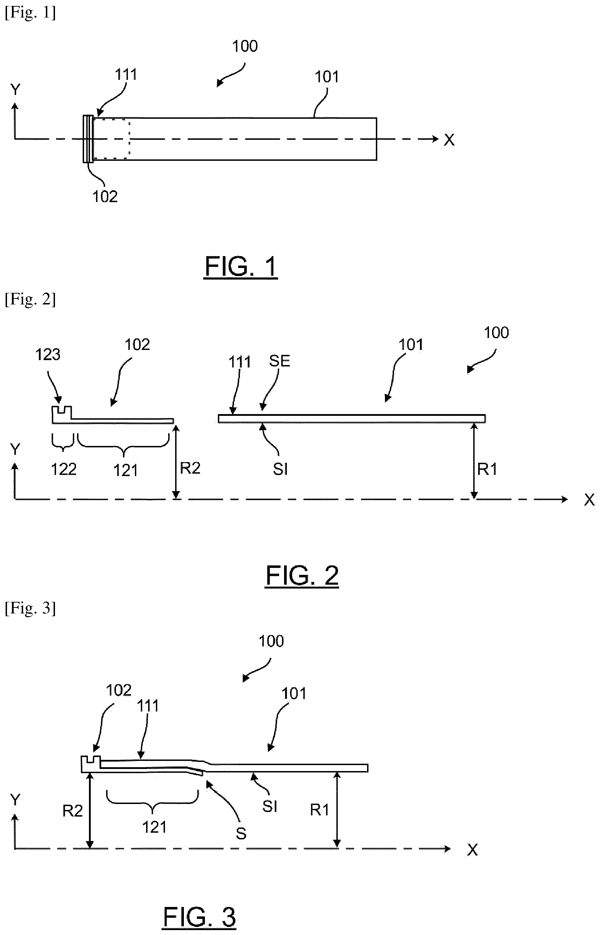

De manière connue, en référence à la [Fig.1], il est représenté une conduite 100 comprenant une canalisation 101 équipée d'un connecteur 102. La canalisation 101 comprend une extrémité de connexion 111, s'étendant selon un axe de canalisation X, destinée à être reliée mécaniquement avec une extrémité de connexion d'une autre canalisation adjacente (non représentée). Pour permettre le raccordement à une canalisation adjacente, le connecteur 102 est inséré dans l'extrémité de connexion 111 de manière à la rigidifier et permettre ainsi un raccordement étanche. Par référence, on définit par la suite que l'axe de canalisation X est orienté de l'amont vers l'aval, c'est-à-dire, qu'il s'étend de l'extérieur vers l'intérieur de la canalisation 101 au niveau de son extrémité de connexion 111.

Comme illustré sur la demi-vue en coupe de la [Fig.2] représentant le connecteur 102 et la canalisation 101 en position non-assemblée, la canalisation 101 définit une surface intérieure de canalisation SI en contact avec le fluide et une surface extérieure de canalisation SE, opposée à la surface intérieure SI. Dans cet exemple, la canalisation 101 comporte un rayon intérieur R1. Le connecteur 102 comprend une portion de liaison 121, configurée pour être insérée à l'intérieur de l'extrémité de connexion 111 de la canalisation 101, et une portion de raccordement 122, configurée pour s'étendre à l'extérieur de la canalisation 101 et destinée à coopérer avec un raccord de liaison pour relier la canalisation 101 à une autre canalisation adjacente. Dans cet exemple, la portion de raccordement 122 comporte un organe de coopération, en particulier, une gorge annulaire 123. De manière connue, la portion de liaison 121 du connecteur 102 comporte un rayon intérieur R2 qui est sensiblement égal au rayon intérieur R1 de la canalisation 101 de manière à assurer une continuité de rayon intérieur en position assemblée.

Pour insérer le connecteur 102 dans l'extrémité de connexion 111 de la canalisation 101 selon l'axe de canalisation X, l'extrémité de connexion 111 en matériau thermoplastique est chauffée pour devenir malléable et se dilater radialement. Lors du refroidissement, l'extrémité de connexion 101 se rétracte radialement autour de la portion de liaison 121 du connecteur 102 de manière à épouser sa forme comme illustré à la [Fig.3]. Suite à l'assemblage, l'extrémité de connexion 111 et le connecteur 102 sont solidaires et reliés de manière étanche.

Un tel procédé d'assemblage présente des inconvénients. En effet, lors du refroidissement de la canalisation 101 thermoplastique, celle-ci déforme radialement la portion de liaison 121 du connecteur 102 également en matériau thermoplastique à l'intérieur de la canalisation 101, comme représenté sur la [Fig.3]. La déformation radiale engendre une saillie S intérieure au niveau de la surface intérieure SI de la canalisation 101. Cette saillie S forme une zone de piégeage pour les liquides ou des résidus dans la canalisation 101, ce qui peut dégrader les conditions de maintenance et présenter des inconvénients concernant les conditions sanitaires requises dans la canalisation 101.

Une solution immédiate pour éliminer cet inconvénient serait d'augmenter la rigidité du connecteur 102 pour limiter sa déformation radiale lors du refroidissement. Une telle solution ne peut pas être retenue car elle ne peut empêcher la déformation radiale du connecteur en matériau thermoplastique.

L'invention vise ainsi à éliminer au moins certains de ces inconvénients en proposant une conduite comprenant un connecteur assemblé à une canalisation dont l'entretien sanitaire et la fiabilité sont améliorés.

Les documents WO99/19658A1, EP0530387A1 et EP3628907A1 présentent des connecteurs selon l'art antérieur comportant des portions biseautées facilitant la connexion.

### PRESENTATION DE L'INVENTION

L'invention concerne une conduite de fluide pour aéronef, la conduite comprenant une canalisation en matériau thermoplastique comprenant une extrémité de connexion s'étendant selon un axe de canalisation et un connecteur destiné à être monté dans l'extrémité de connexion par un mouvement de translation selon l'axe de canalisation d'amont vers l'aval,
- l'extrémité de connexion définissant une surface intérieure de canalisation, configurée pour être en contact avec un fluide, et une surface extérieure de canalisation, opposée à la surface intérieure de canalisation,
- le connecteur s'étendant selon un axe de connecteur et comportant une portion de liaison, s'étendant longitudinalement selon l'axe de connecteur, configurée pour s'étendre dans l'extrémité de connexion, la portion de liaison définissant une surface intérieure de connecteur, destinée à être en contact avec le fluide, et une surface extérieure de connecteur, opposée à la surface intérieure de connecteur et configurée pour être en contact avec la surface intérieure de canalisation de l'extrémité de connexion,

Le connecteur est remarquable par le fait que la portion de liaison comporte une extrémité longitudinale libre qui est biseautée, l'extrémité longitudinale libre étant configurée pour être déformée radialement suite au montage du connecteur dans l'extrémité de connexion, préalablement dilatée thermiquement, de manière à ce que la conduite possède une surface intérieure ayant un rayon intérieur sensiblement constant à l'interface entre le connecteur et la canalisation.

La canalisation selon l'invention permet de limiter le risque de formation d'une discontinuité entre la surface intérieure de connecteur et la surface intérieure de canalisation lorsque le connecteur est monté dans l'extrémité de connexion de la canalisation. La liaison entre le connecteur et la canalisation permet ainsi de limiter le risque de formation d'une zone de rétention d'eau, voire de rétention de déchets, qui pourrait réduire la qualité d'entretien sanitaire de la canalisation. De manière avantageuse, avant assemblage, la portion de liaison du connecteur possède une forme imparfaite qui est déformée lors de l'assemblage afin que la conduite possède une surface intérieure ayant un rayon intérieur sensiblement constant à l'interface entre le connecteur et la canalisation. Une extrémité longitudinale libre biseautée permet de tirer avantage de l'élasticité de la portion de liaison afin de permettre une rotation du biseau au cours du refroidissement.

De préférence, la portion de liaison du connecteur présente une épaisseur comprise entre 1,15 et 1,50 mm.

De préférence, dans un plan en demi-coupe longitudinale par rapport à l'axe de connecteur, l'extrémité longitudinale libre comporte une paroi inclinée, par rapport à l'axe de connecteur, formée à la surface intérieure de connecteur. La paroi inclinée est inclinée radialement vers l'extérieur dans le sens d'amont vers l'aval. De préférence, suite au montage du connecteur dans l'extrémité de connexion, la paroi inclinée est configurée pour s'étendre parallèlement à l'axe de canalisation.

De préférence, la canalisation est tubulaire de rayon intérieur constant.

De manière préférée, la paroi inclinée forme avec l'axe de connecteur un angle d'inclinaison compris entre 5 et 10°. Un tel angle d'inclinaison correspond à l'angle d'inclinaison induit lors du refroidissement de la canalisation.

De préférence, la surface intérieure de connecteur comprend une paroi longitudinale, de rayon intérieur constant, et une paroi inclinée. De manière préférée encore, la surface intérieure du connecteur comprend uniquement une paroi longitudinale et une paroi inclinée. La structure du connecteur est simple, ce qui facilite sa fabrication et limite sa masse.

Selon un aspect préféré, la longueur longitudinale de la projection de la paroi inclinée sur l'axe de connecteur est comprise entre 3 et 6 mm.

De préférence, la longueur longitudinale de la paroi longitudinale est comprise entre 15 et 20 mm.

De manière préférée, dans un plan en demi-coupe longitudinale par rapport à l'axe du connecteur, l'extrémité longitudinale libre comporte au moins une paroi curviligne formée à la surface extérieure de connecteur. De préférence, la paroi curviligne s'étend en regard de la paroi inclinée de manière à guider les forces de contraction radiale. De préférence, la paroi curviligne présente un rayon de courbure compris entre 1,5 et 3 mm. Une telle paroi curviligne remplit avantageusement une double fonction en permettant, d'une part, d'éviter une blessure de la canalisation lors de l'insertion et lors du refroidissement. D'autre part, une telle paroi curviligne permet de guider les efforts de contraction radiale pour déformer l'extrémité longitudinale libre de manière contrôlée.

De manière préférée, la surface extérieure de connecteur comprend au moins un organe d'accrochage s'étendant radialement en saillie. De préférence, l'organe d'accrochage présente successivement, dans le plan en demi-coupe longitudinale, une portion inclinée, pour permettre un montage par insertion du connecteur dans l'extrémité de connexion de la canalisation par translation vers l'aval selon l'axe de canalisation, et une portion de butée radiale pour empêcher le retrait par translation vers l'amont selon l'axe de canalisation. De préférence encore, la surface extérieure de connecteur comprend au moins deux organes d'accrochage.

L'invention concerne également une canalisation dont le connecteur est assemblé dans l'extrémité de connexion de la canalisation par un mouvement de translation selon l'axe de canalisation d'amont vers l'aval, l'extrémité longitudinale libre étant déformée radialement suite au montage du connecteur dans l'extrémité de connexion, préalablement dilatée thermiquement, la conduite possédant une surface intérieure ayant un rayon intérieur sensiblement constant à l'interface entre le connecteur et la canalisation. En position assemblée, la surface intérieure possède un rayon intérieur sensiblement constant, sans saillie ni creux, ce qui évite toute rétention de fluide pouvant conduire à une limitation de la qualité d'entretien sanitaire de la canalisation.

L'invention vise également un circuit de fluide, en particulier pour aéronef, comprenant au moins deux conduites telles que présentées précédemment, les connecteurs des conduites étant reliées par un raccord de liaison.

L'invention concerne également un procédé d'assemblage d'une conduite telle que présentée précédemment, le procédé comprenant :
- une étape de préformage à chaud de l'extrémité de connexion de la canalisation de manière à la dilater radialement,
- une étape d'insertion de la portion de liaison du connecteur dans l'extrémité de connexion de la canalisation,
- une étape de déformation radiale, lors du refroidissement de l'extrémité de connexion de la canalisation, de l'extrémité longitudinale libre de manière à ce que la conduite possède une surface intérieure ayant un rayon intérieur sensiblement constant à l'interface entre le connecteur et la canalisation.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
[Fig.1] La [Fig.1] est une représentation schématique d'une conduite comprenant une canalisation et un connecteur de l'art antérieur qui sont assemblés.
[Fig.2] La [Fig.2] est une vue en demi-coupe longitudinale de la canalisation et du connecteur de la [Fig.1] en position non-assemblée.
[Fig.3] La [Fig.3] est une représentation schématique en coupe de la conduite de la [Fig.1].
[Fig.4] La [Fig.4] est une représentation schématique d'une conduite comprenant une canalisation et un connecteur selon une forme de réalisation de l'invention qui sont assemblés.
[Fig.5] La [Fig.5] est une vue en demi-coupe longitudinale de la canalisation et du connecteur de la [Fig.4] en position non-assemblée.
[Fig.6] La [Fig.6] est une vue rapprochée du connecteur de la [Fig.5].
[Fig.7] La [Fig.7] est une vue rapprochée d'une extrémité longitudinale libre du connecteur de la [Fig.6].
[Fig.8] La [Fig.8] est une représentation schématique de deux organes d'accrochage du connecteur de la [Fig.6].
[Fig.9] La [Fig.9] est une représentation schématique des étapes d'un procédé d'assemblage d'un connecteur et d'une canalisation selon un mode de mise en oeuvre de l'invention.
[Fig.10] La [Fig.10] est une représentation schématique d'une étape de préformage à chaud de l'extrémité de connexion de la canalisation.
[Fig.11] La [Fig.11] est une représentation schématique d'une étape d'insertion de la portion de liaison du connecteur dans l'extrémité de connexion de la canalisation.
[Fig.12] La [Fig.12] est une représentation schématique de la conduite au début de l'étape de refroidissement.
[Fig.13] La [Fig.13] est une représentation schématique de la conduite à la fin de l'étape de refroidissement.
[Fig.14] La [Fig.14] est une représentation schématique rapprochée de l'interface entre le connecteur et la canalisation au début et à la fin de l'étape de refroidissement.
[Fig.15] La [Fig.15] est une représentation schématique d'un circuit de fluide comprenant deux conduites reliées par un raccord.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

L'invention concerne une conduite CA de fluide pour aéronef, la conduite CA comprenant une canalisation 1 en matériau thermoplastique comprenant une extrémité de connexion 11 s'étendant selon un axe de canalisation X et un connecteur 2 destiné à être monté dans l'extrémité de connexion 11 par un mouvement de translation selon l'axe de canalisation X d'amont vers l'aval. De telles conduites CA peuvent être raccordées pour former un circuit de fluide, par exemple un circuit d'eaux usées monté dans un aéronef. Chaque conduite CA possède de préférence une section circulaire.

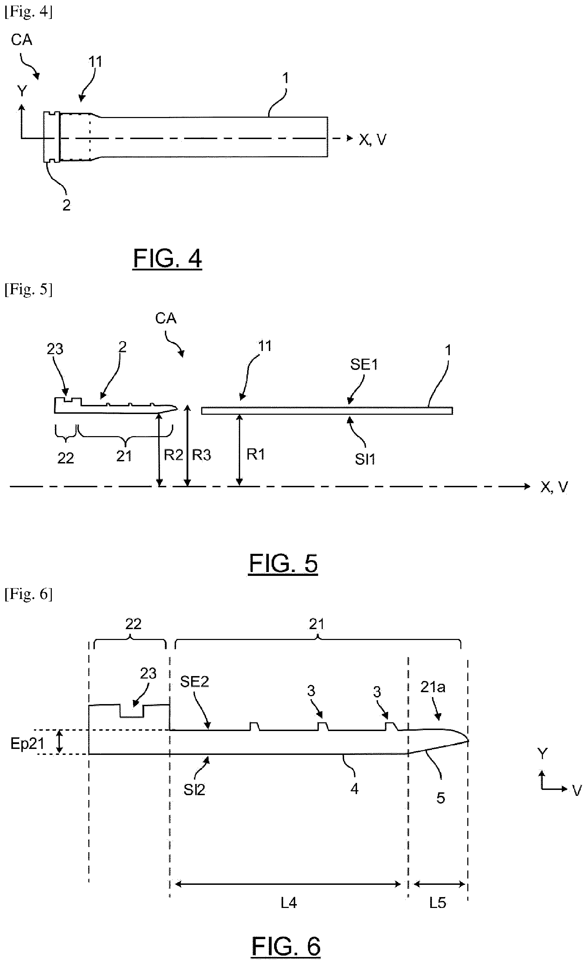

Comme représenté sur la [Fig.4], la canalisation 1 comprend une extrémité de connexion 11 s'étendant longitudinalement selon l'axe de canalisation X, orienté d'amont en aval, et radialement selon un axe Y, orienté de l'intérieur vers l'extérieur, de manière à former un repère orthogonal (X, Y). La canalisation 1 peut être rectiligne ou cintrée et comprendre une pluralité d'extrémités de connexion 11. En référence à la [Fig.5], l'extrémité de connexion 11 (de même que la canalisation 1) définit une surface intérieure de canalisation SI1, configurée pour être en contact avec le fluide, et une surface extérieure de canalisation SE1, opposée à la surface intérieure de canalisation SI1.

La canalisation 1 est réalisée dans un matériau thermoplastique. De préférence, la canalisation 1 est réalisée dans un matériau polymère PEEK (signifiant polyétheréthercétone), permettant l'utilisation d'une canalisation 1 semi-rigide (donc plus facile à manipuler et à installer), légère et robuste.

Dans cet exemple, la canalisation 1 présente une épaisseur inférieure à 2 mm, de manière à réduire sa masse. De préférence, l'épaisseur de la canalisation 1 est comprise entre 0,5 et 2 mm. L'extrémité de connexion 11 possède un rayon intérieur R1 qui dépend de la dimension de la canalisation 1 et qui est, de préférence, compris entre 10 et 60 mm. Le rayon intérieur R1 correspond au rayon de la canalisation 1 à l'état de repos, c'est-à-dire lorsque la canalisation 1 est froide et n'est soumise à aucun effort.

En référence aux figures 5 et 6, le connecteur 2 est destiné à être monté à l'extrémité de connexion 11 de la canalisation 1 comme illustré à la [Fig.4]. En particulier, le connecteur 2 est configuré pour être inséré dans l'extrémité de connexion 11 par translation vers l'aval selon l'axe de canalisation X comme cela sera décrit plus en détails par la suite.

Le connecteur 2 s'étend selon un axe de connecteur V. Comme représenté sur la [Fig.4], lorsque le connecteur 2 est monté dans l'extrémité de connexion 11 de la canalisation 1, l'axe de connecteur V et l'axe de canalisation X sont coaxiaux.

De manière préférée, le connecteur 2 est réalisé dans un matériau thermoplastique. De préférence encore, le connecteur 2 est réalisé dans un matériau polymère PEEK permettant l'utilisation d'un connecteur 2 semi-rigide donc facile à manipuler, léger et robuste. L'assemblage d'une canalisation 1 et d'un connecteur 2 formés dans des matériaux thermoplastiques assure une liaison optimale. Le connecteur 2 est obtenu par usinage ou par moulage, notamment, par injection.

En référence aux figures 5 et 6, le connecteur 2 comporte une portion de liaison 21 à la canalisation 1, destinée à être insérée dans l'extrémité de connexion 11 de la canalisation 1, et une portion de raccordement 22, destinée à être positionnée extérieurement à la canalisation 1. La portion de liaison 21 forme une partie aval tandis que la portion de raccordement 22 forme une partie amont du connecteur 2. De manière préférée, le connecteur 2 comporte uniquement une portion de liaison 21 et une portion de raccordement 22.

De manière préférée, la portion de raccordement 22 est destinée à être positionnée en vis-à-vis de la portion de raccordement 22 d'un autre connecteur 2 d'une canalisation 1 adjacente, en vue de leur raccordement pour former un circuit de fluide.

Comme représenté sur la [Fig.6], la portion de raccordement 22 comprend un organe de coopération 23, en particulier, une gorge annulaire pour permettre la mise en place d'un raccord de liaison reliant deux conduites CA adjacentes. Il va de soi que l'organe de coopération 23 pourrait se présenter sous une forme différente, une portion en saillie, un doigt, etc.

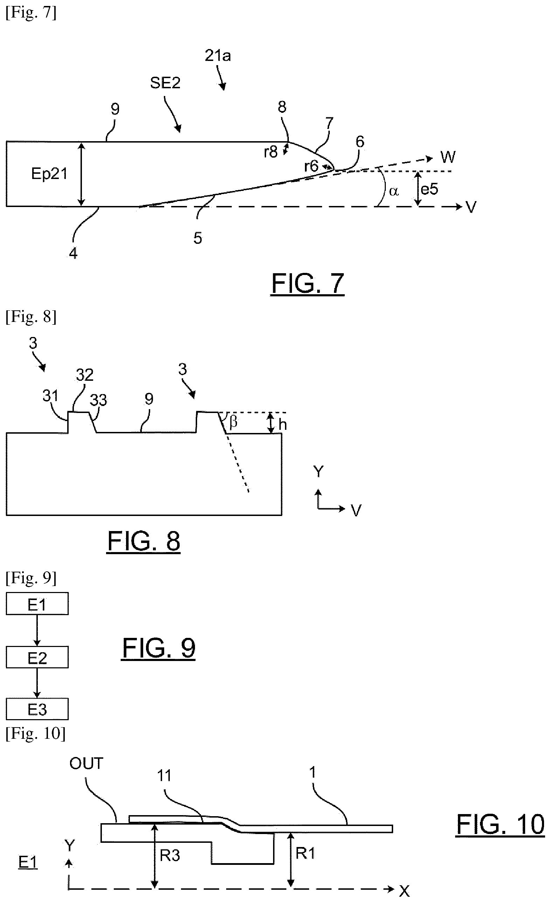

Toujours en référence à la [Fig.6], la portion de liaison 21 comporte une extrémité longitudinale libre 21a dont une vue rapprochée est représentée sur la [Fig.7].

La portion de liaison 21 du connecteur 2 présente un rayon extérieur R3 ([Fig.5]) strictement supérieur au rayon intérieur R1 de la canalisation 1, de manière à assurer une liaison étanche, comme cela sera décrit par la suite. Dans cet exemple, la portion de liaison 21 présente une épaisseur Ep21 comprise entre 1,15 et 1,50 mm. La portion de liaison 21 définit une surface intérieure de connecteur SI2 et une surface extérieure de connecteur SE2, opposée à la surface intérieure de connecteur SI2.

La surface intérieure de connecteur SI2 est destinée à être en contact avec le fluide, lorsque la conduite CA est assemblée.

En référence à la [Fig.6], la surface intérieure de connecteur SI2 comporte, dans un plan en demi-coupe longitudinale, successivement selon l'axe de connecteur V, une paroi longitudinale 4 rectiligne, parallèle à l'axe de connecteur V, de rayon intérieur R2 (représenté sur la [Fig.5]) constant, et une paroi inclinée 5 par rapport à l'axe de connecteur V de manière à former une extrémité longitudinale libre 21a biseautée, c'est-à-dire, dont la section est décroissante d'amont vers l'aval comme illustré à la [Fig.6]. Le rayon intérieur R2 de la paroi longitudinale 4 rectiligne est sensiblement identique au rayon intérieur R1 de l'extrémité de connexion 11.

La paroi longitudinale 4 s'étend parallèlement à l'axe de connecteur V et possède une longueur L4 comprise entre 9 et 25 mm. La portion de liaison 21 est ainsi suffisamment longue pour maintenir le connecteur 2 en position dans l'extrémité de connexion 11 de la canalisation 1.

En référence à la [Fig.7], la paroi inclinée 5 est formée au niveau de l'extrémité longitudinale libre 21a de la portion de liaison 21 et s'étend suivant un axe oblique W formant avec l'axe de connecteur V un angle d'inclinaison α strictement supérieur à 0°, de préférence, compris entre 5° et 10°. L'extrémité longitudinale libre 21a de la portion de liaison 21 est ainsi convergente. Autrement dit, l'extrémité longitudinale libre 21a du connecteur 2 présente la forme d'un bec, configurée pour assurer une continuité avec la surface intérieure de canalisation SI1 lorsque le connecteur 2 est monté dans l'extrémité de connexion 11, comme cela sera décrit plus en détails par la suite. Du fait du biseau, l'extrémité longitudinale libre 21a de la portion de liaison 21 peut se déformer lors de l'assemblage de manière contrôlée afin de s'aligner parallèlement à l'axe de connecteur V, évitant ainsi toute saillie intérieure désavantageuse.

De préférence, la projection de la paroi inclinée 5 sur l'axe de connecteur V détermine une longueur L5 (représentée sur la [Fig.6]) comprise entre 3 et 6 mm. Toujours en référence à la [Fig.7], la paroi inclinée 5 détermine un espace de déformation e5 entre son extrémité aval et l'axe de connecteur V compris entre 0,4 et 0,8 mm qui permet à l'extrémité longitudinale libre 21a de s'incliner afin de s'aligner parallèlement avec l'axe de connecteur V comme cela sera présenté par la suite.

La surface extérieure de liaison SE2 du connecteur 2 est configurée pour être en contact avec la surface intérieure de canalisation SI1 de l'extrémité de connexion 11.

En référence à la [Fig.6], la surface extérieure de liaison SE2 du connecteur 2 comprend une pluralité d'organes d'accrochage 3 s'étendant radialement en saillie de la surface extérieure de liaison SE2. Les organes d'accrochage 3 permettent une fois le connecteur 2 assemblé à la canalisation 1 de le maintenir en position et d'éviter un désassemblage. De préférence, la surface extérieure de liaison SE2 comprend trois organes d'accrochage 3, de manière à renforcer la liaison entre le connecteur 2 et la canalisation 1. Comme illustré à la [Fig.6], les organes d'accrochage 3 sont décalés longitudinalement sur la longueur du connecteur 2, c'est-à-dire suivant l'axe de connecteur V. De préférence encore, les organes d'accrochage 3 sont équitablement répartis sur la longueur de la portion de liaison 21.

En référence à la [Fig.8], chaque organe d'accrochage 3 présente une hauteur h, c'est-à-dire une distance radiale suivant l'axe Y dans le plan de demi-coupe longitudinale, comprise entre 0,4 et 0,75 mm. Dans cet exemple, chaque organe d'accrochage 3 présente successivement d'amont en aval, dans le plan en demi-coupe longitudinale, une portion de butée radiale 31, une portion longitudinale 32 et une portion inclinée 33. La portion inclinée 33 permet un montage par insertion d'amont vers l'aval du connecteur 2 dans l'extrémité de connexion 11 de la canalisation 1 en favorisant le glissement de la canalisation 1 contre l'organe d'accrochage 3. Dans cet exemple, la portion inclinée 33 forme avec l'axe de connecteur V un angle β compris entre 30 et 60°, de manière à faciliter l'insertion du connecteur 2 dans la canalisation 1. A l'inverse, la portion de butée radiale 31 permet d'empêcher le retrait du connecteur 2 par translation d'aval vers l'amont.

De préférence, la portion inclinée 33 et la portion longitudinale 32, de même que la portion longitudinale 32 et la portion de butée radiale 31, sont reliées par un chanfrein arrondi (non représenté) permettant de limiter l'usure ou l'endommagement de la canalisation 1 lors de l'insertion du connecteur 2 dans l'extrémité de connexion 11. Un tel arrondi facilite le glissement d'une pièce par rapport à l'autre.

Dans une forme de réalisation préférée, en référence à la [Fig.7], la surface extérieure de liaison SE2 comprend successivement d'aval vers l'amont, dans le plan en demi-coupe longitudinale, à partir de l'extrémité longitudinale libre 21a : une pointe d'insertion 6, une paroi inclinée rectiligne 7, une paroi curviligne 8 et une paroi longitudinale rectiligne 9 qui est parallèle à l'axe de connecteur V. Les organes d'accrochage 3 sont formés sur la paroi longitudinale rectiligne 9.

La pointe d'insertion 6 présente de préférence un profil arrondi de manière à limiter le risque d'endommagement de la canalisation 1 lors de l'insertion du connecteur 2. De préférence, la pointe d'insertion 6 arrondie présente un rayon de courbure r6 compris entre 0,2 et 0,4 mm. La paroi curviligne 8 forme, sur la surface extérieure de liaison SE2, une portion torique, qui permet de faciliter l'insertion du connecteur 2 dans l'extrémité de connexion 11 de la canalisation 1, sans endommager la canalisation 1. La paroi curviligne 8 présente de préférence un rayon de courbure r8 compris entre 1,5 et 3 mm.

Il va dorénavant être décrit un procédé d'assemblage d'une canalisation 1 et d'un connecteur 2, selon un mode de mise en oeuvre de l'invention, en référence à la [Fig.9].

Le procédé d'assemblage comprend tout d'abord une étape de préformage E1 à chaud de l'extrémité de connexion 11 de la canalisation 1. Pour cela, en référence à la [Fig.10], un opérateur chauffe l'extrémité de connexion 11 qui s'assouplie sous l'effet de la chaleur et insère un outillage OUT permettant de dilater radialement les parois de la canalisation 1 et ainsi d'augmenter son rayon intérieur R1, jusqu'à atteindre un rayon intérieur similaire au rayon extérieur R3 de la portion de liaison 21 du connecteur 2.

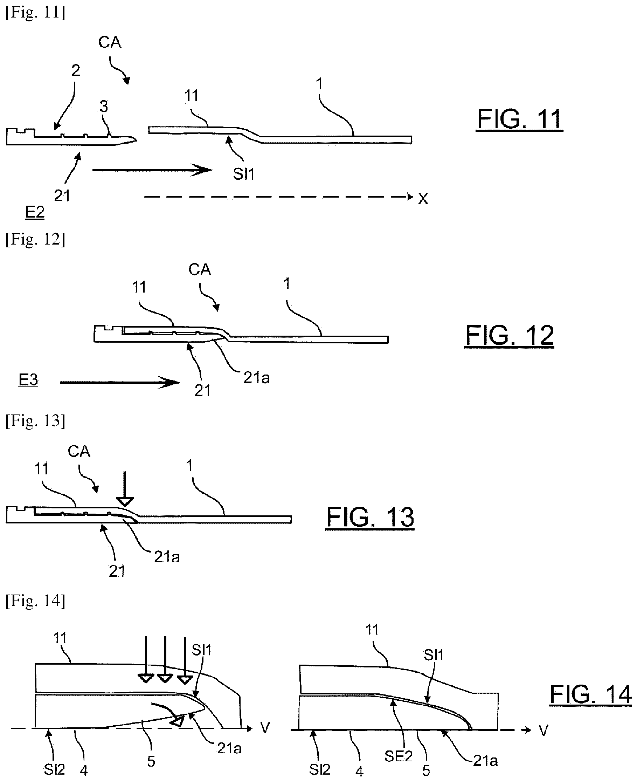

La canalisation 1 étant toujours chaude, l'opérateur insère ensuite, dans une deuxième étape d'insertion E2, la portion de liaison 21 du connecteur 2 dans l'extrémité de connexion 11 de la canalisation 1 comme illustré à la [Fig.11]. Grâce au profil des organes d'accrochage 3, la surface intérieure de canalisation SI1 glisse le long des portions inclinées 33, facilitant l'insertion du connecteur 2 dans la canalisation 1.

En référence à la [Fig.12], lorsque la portion de liaison 21 est insérée dans l'extrémité de connexion 11, le procédé comprend une étape de refroidissement E3 de l'extrémité de connexion 11 de la canalisation 1, qui se contracte et se resserre ainsi radialement de manière à venir plaquer de manière intime la surface intérieure de canalisation SI1 contre la surface extérieure du connecteur SE2. La liaison est ainsi réalisée par rétractation due au refroidissement à température ambiante, dans cet exemple entre 15 et 20°C.

Lors du refroidissement de l'extrémité de connexion 11 de la première canalisation 1, l'extrémité longitudinale libre 21a en forme de biseau est déformée progressivement radialement vers l'intérieur du connecteur 2 comme représenté aux figures 13 et 14. La paroi inclinée 5 de la surface intérieure de connecteur SI2 est alors progressivement alignée, au cours de l'étape de refroidissement E3, avec la paroi longitudinale 4 parallèlement à l'axe de connecteur V de manière à ce que la conduite CA possède une surface intérieure ayant un rayon intérieur sensiblement constant à l'interface entre le connecteur 2 et la canalisation 1 ([Fig.14]). Autrement dit, lors de l'assemblage, l'extrémité longitudinale libre 21a est contrainte et permet d'obtenir un alignement optimal. De manière astucieuse, avant l'assemblage, l'extrémité longitudinale libre 21a possède une forme imparfaite qui est corrigée par l'étape de refroidissement E3 du procédé d'assemblage. On tire avantage de l'élasticité de l'extrémité longitudinale libre 21a pour assurer une déformation contrôlée.

Comme illustré à la [Fig.14], la surface extérieure de connecteur SE2 de l'extrémité longitudinale libre 21a permet d'épouser la forme de la surface intérieure de canalisation SI1 de manière à former une liaison robuste, étanche et dépourvue de contraintes pouvant réduire la durée de vie de l'assemblage. Il n'existe pas de point de faiblesse, en particulier, lorsque le connecteur 2 et la canalisation 1 sont en matériaux thermoplastiques. De plus, une telle liaison robuste permet de faciliter l'entretien sanitaire des conduites CA.

Lorsque la canalisation 1 est refroidie, l'extrémité longitudinale libre 21a du connecteur 2 ne forme ni saillie intérieure, ni discontinuité pouvant conduire au piégeage de fluides. Le risque de défaut est considérablement réduit. Grâce au procédé d'assemblage selon l'invention, la conduite CA obtenue est étanche et robuste, même avec une canalisation en polymère PEEK d'épaisseur fine.

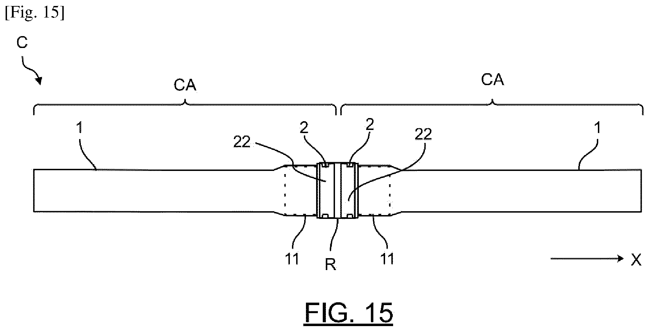

Il a été présenté l'assemblage d'un connecteur 2 à une extrémité de connexion 11 d'une canalisation 1. Le procédé d'assemblage peut avantageusement être répété pour chaque extrémité de connexion 11 d'une canalisation 1 afin d'obtenir des conduites CA de fluide pouvant être fixées à la structure d'un aéronef. En référence à la [Fig.15], les conduites CA sont ensuite reliées ensemble par un raccord de liaison R afin de former un circuit de fluide C. De manière avantageuse, le raccord de liaison R coopère avec les portions de raccordement 22 des connecteurs 2 pour assurer une liaison optimale.

## Revendications

1. Conduite (CA) de fluide pour aéronef, la conduite (CA) comprenant une canalisation (1) en matériau thermoplastique comprenant une extrémité de connexion (11) s'étendant selon un axe de canalisation (X) et un connecteur (2) destiné à être monté dans l'extrémité de connexion (11) par un mouvement de translation selon l'axe de canalisation (X) d'amont vers l'aval,
• l'extrémité de connexion (11) définissant une surface intérieure de canalisation (SI1) configurée pour être en contact avec un fluide et une surface extérieure de canalisation (SE1), opposée à la surface intérieure de canalisation (SI1),
• le connecteur (2) s'étendant selon un axe de connecteur (V) et comportant une portion de liaison (21), s'étendant longitudinalement selon l'axe de connecteur (V), configurée pour s'étendre dans l'extrémité de connexion (11), la portion de liaison (21) définissant une surface intérieure de connecteur (SI2), destinée à être en contact avec le fluide, et une surface extérieure de connecteur (SE2), opposée à la surface intérieure de connecteur (SI2) et configurée pour être en contact avec la surface intérieure de canalisation (SI1) de l'extrémité de connexion (11), la portion de liaison (21) comportant une extrémité longitudinale libre (21a) qui est biseautée,
• connecteur (2) **caractérisé par le fait que** l'extrémité longitudinale libre (21a) est configurée pour être déformée radialement suite au montage du connecteur (2) dans l'extrémité de connexion (11), préalablement dilatée thermiquement, de manière à ce que la conduite (CA) possède une surface intérieure ayant un rayon intérieur sensiblement constant à l'interface entre le connecteur (2) et la canalisation (1).

2. Conduite (CA) selon la revendication 1, dans laquelle, dans un plan en demi-coupe longitudinale par rapport à l'axe de connecteur (V), l'extrémité longitudinale libre (21a) comporte une paroi inclinée (5), par rapport à l'axe de connecteur (V), formée à la surface intérieure de connecteur (SI2).

3. Conduite (CA) selon la revendication 2, dans laquelle la paroi inclinée (5) forme avec l'axe de connecteur (V) un angle d'inclinaison (α) compris entre 5 et 10°.

4. Conduite (CA) selon l'une des revendications 2 et 3, dans laquelle la surface intérieure de connecteur (SI2) comprend une paroi longitudinale (4), de rayon intérieur constant, et une paroi inclinée (5).

5. Conduite (CA) selon l'une des revendications 1 à 4, dans laquelle la longueur longitudinale (L5) de la projection de la paroi inclinée (5) sur l'axe de connecteur (V) est comprise entre 3 et 6 mm.

6. Conduite (CA) selon l'une des revendications 1 à 5, dans laquelle la longueur longitudinale (L4) de la paroi longitudinale (4) est comprise entre 9 et 25 mm.

7. Conduite (CA) selon l'une des revendications 1 à 6, dans laquelle, dans un plan en demi-coupe longitudinale par rapport à l'axe de connecteur (V), l'extrémité longitudinale libre (21a) comporte au moins une paroi curviligne (8) formée à la surface extérieure de connecteur (SE2).

8. Conduite (CA) selon l'une des revendications 1 à 7, dans laquelle la surface extérieure de connecteur (SE2) comprend au moins un organe d'accrochage (3) s'étendant radialement en saillie.

9. Conduite de fluide (CA) selon l'une des revendications 1 à 8, dans laquelle le connecteur (2) est assemblé dans l'extrémité de connexion (11) de la canalisation (1) par un mouvement de translation selon l'axe de canalisation (X) d'amont vers l'aval, l'extrémité longitudinale libre (21a) étant déformée radialement suite au montage du connecteur (2) dans l'extrémité de connexion (11), préalablement dilatée thermiquement, la conduite (CA) possédant une surface intérieure ayant un rayon intérieur sensiblement constant à l'interface entre le connecteur (2) et la canalisation (1).

10. Circuit de fluide (C), en particulier pour aéronef, comprenant au moins deux conduites (CA) selon la revendication 9, les connecteurs (2) des conduites (CA) étant reliés par un raccord de liaison (R).

11. Procédé d'assemblage d'une conduite (CA) selon l'une des revendications 1 à 9, le procédé comprenant :
• une étape de préformage à chaud (E1) de l'extrémité de connexion (11) de la canalisation (1) de manière à la dilater radialement,
• une étape d'insertion (E2) de la portion de liaison (21) du connecteur (2) dans l'extrémité de connexion (11) de la canalisation (1),
• une étape de déformation (E3) radiale, lors du refroidissement de l'extrémité de connexion (11) de la canalisation (1), de l'extrémité longitudinale libre (21a) de manière à ce que la conduite (CA) possède une surface intérieure ayant un rayon intérieur sensiblement constant à l'interface entre le connecteur (2) et la canalisation (1).

## Patentansprüche

1. Fluidleitung (CA) für Luftfahrzeug, wobei die Leitung (CA) einen Kanal (1) aus thermoplastischem Material umfasst, der ein Verbinderende (11) umfasst, das sich gemäß einer Kanalachse (X) erstreckt, und einen Verbinder (2), der zum Anbringen im Verbinderende (11) durch eine Translationsbewegung gemäß der Kanalachse (X) von stromaufwärts nach stromabwärts bestimmt ist,
• wobei das Verbinderende (11) eine innere Kanaloberfläche (SI1) definiert, das dazu ausgelegt ist, mit einem Fluid im Kontakt zu sein, und eine äußere Kanaloberfläche (SE1) gegenüber der inneren Kanaloberfläche (SI1),
• wobei sich der Verbinder (2) gemäß einer Verbinderachse (V) erstreckt und einen Verbindungsabschnitt (21) aufweist, der sich längst gemäß der Verbinderachse (V) erstreckt, dazu ausgelegt ist, sich im Verbinderende (11) zu erstrecken, wobei der Verbindungsabschnitt (21) eine innere Verbinderoberfläche (SI2) definiert, die bestimmt ist, mit dem Fluid im Kontakt zu sein, und eine äußere Verbinderoberfläche (SE2) gegenüber der inneren Verbinderoberfläche (SI2) und dazu ausgelegt, mit der inneren Kanaloberfläche (SI1) des Verbinderendes (11) im Kontakt zu sein, wobei der Verbindungsabschnitt (21) ein freies Längsende (21a) aufweist, das abgeschrägt ist,
• wobei der Verbinder (2) **dadurch gekennzeichnet ist, dass** das freie Längsende (21a) dazu ausgelegt ist, infolge der Anbringung des Verbinders (2) im zuvor thermisch erweiterten Verbinderende (11) derart radial verformt zu werden, dass die Leitung (CA) eine innere Oberfläche mit einem etwa konstanten inneren Radius an der Schnittstelle zwischen dem Verbinder (2) und dem Kanal (1) besitzt.

2. Leitung (CA) nach Anspruch 1, wobei das freie Längsende (21a) in einer länglichen Halbschnittebene im Verhältnis zur Verbinderachse (V) eine im Verhältnis zur Verbinderachse (V) geneigte Wand (5) aufweist, die an der inneren Verbinderoberfläche (SI2) ausgebildet ist.

3. Leitung (CA) nach Anspruch 2, wobei die geneigte Wand (5) mit der Verbinderachse (V) einen Neigungswinkel (α) bildet, der zwischen 5 und 10° liegt.

4. Leitung (CA) nach einem der Ansprüche 2 und 3, wobei die innere Verbinderoberfläche (SI2) eine Längswand (4) mit konstantem innerem Radius und eine geneigte Wand (5) umfasst.

5. Leitung (CA) nach einem der Ansprüche 1 bis 4, wobei die längliche Länge (L5) der Projektion der geneigten Wand (5) auf die Verbinderachse (V) zwischen 3 und 6 mm beträgt.

6. Leitung (CA) nach einem der Ansprüche 1 bis 5, wobei die längliche Länge (L4) der Längswand (4) zwischen 9 und 25 mm beträgt.

7. Leitung (CA) nach einem der Ansprüche 1 bis 6, wobei das freie Längsende (21a) in einer länglichen Halbschnittebene im Verhältnis zur Verbinderachse (V) mindestens eine gekrümmte Wand (8) aufweist, die an der äußeren Verbinderoberfläche (SE2) ausgebildet ist.

8. Leitung (CA) nach einem der Ansprüche 1 bis 7, wobei die äußere Verbinderoberfläche (SE2) mindestens ein Verankerungsorgan (3) umfasst, das sich radial hervorstehend erstreckt.

9. Fluidleitung (CA) nach einem der Ansprüche 1 bis 8, wobei der Verbinder (2) im Verbinderende (11) des Kanals (1) durch eine Translationsbewegung gemäß der Kanalachse (X) von stromaufwärts nach stromabwärts zusammengebaut ist, wobei das freie Längsende (21a) infolge der Anbringung des Verbinders (2) im zuvor thermisch erweiterten Verbinderende (11) radial verformt wird, wobei die Leitung (CA) eine innere Oberfläche mit einem etwa konstanten inneren Radius an der Schnittstelle zwischen dem Verbinder (2) und dem Kanal (1) besitzt.

10. Fluidkreislauf (C), vor allem für ein Luftfahrzeug, der mindestens zwei Leitungen (CA) nach Anspruch 9 umfasst, wobei die Verbinder (2) der Leitungen (CA) durch einen Verbindungsanschluss (R) verbunden sind.

11. Verfahren zum Zusammenbauen einer Leitung (CA) nach einem der Ansprüche 1 bis 9, wobei das Verfahren umfasst:
• einen Schritt des warmen Vorformens (E1) des Verbinderendes (11) des Kanals (1) derart, dass es radial erweitert wird,
• einen Schritt des Einsetzens (E2) des Verbindungsabschnitts (21) des Verbinders (2) in das Verbinderende (11) des Kanals (1),
• einen Schritt des radialen Verformens (E3) des freien Längsende (21a) beim Abkühlen des Verbinderendes (11) des Kanals (1) derart, dass die Leitung (CA) eine innere Oberfläche mit einem etwa konstanten inneren Radius an der Schnittstelle zwischen dem Verbinder (2) und dem Kanal (1) besitzt.

## Claims

1. An aircraft fluid conduit (CA), the conduit (CA) comprising a piping (1) of thermoplastic material comprising a connection end (11) extending along a piping axis (X) and a connector (2) to be mounted in the connection end (11) by a translational movement along the piping axis (X) from upstream to downstream,
- the connection end (11) defining a piping internal surface (SI1) configured to be in contact with a fluid and a piping external surface (SE1), opposite to the piping internal surface (S11).
- the connector (2) extending along a connector axis (V) and comprising a connecting portion (21), extending longitudinally along the connector axis (V) configured to extend into the connection end (11), the connecting portion (21) defining a connector internal surface (SI2), to be in contact with the fluid, and a connector external surface (SE2), opposite to the connector internal surface (SI2) and configured to be in contact with the piping internal surface (SI1) of the connection end (11), the connecting portion (21) having a free longitudinal end (21a) that is beveled,
- which connector (2) is **characterized in that** the free longitudinal end (21a) is configured to be radially deformed following mounting the connector (2) into the connector end (11), previously thermally expanded, so that the conduit (CA) has an internal surface having a substantially constant internal radius at the interface between the connector (2) and the piping (1).

2. The conduit (CA) according to claim 1, wherein, in a longitudinal half cross-section plane with respect to the connector axis (V), the free longitudinal end (21a) comprises a tilted wall (5), with respect to the connector axis (V), formed on the connector internal surface (S12).

3. The conduit (CA) according to claim 2, wherein the tilted wall (5) forms with the connector axis (V) a tilt angle (α) of between 5 and 10°.

4. The conduit (CA) according to one of claims 2 and 3, wherein the connector internal surface (SI2) comprises a longitudinal wall (4), with a constant internal radius, and a tilted wall (5).

5. The conduit (CA) according to any one of claims 1 to 4, wherein the longitudinal length (L5) of the projection of the tilted wall (5) onto the connector axis (V) is between 3 and 6 mm.

6. The conduit (CA) according to one of claims 1 to 5, wherein the longitudinal length (L4) of the longitudinal wall (4) is between 9 and 25 mm.

7. The conduit (CA) according to any one of claims 1 to 6, wherein, in a longitudinal half cross-section plane with respect to the connector axis (V), the free longitudinal end (21a) comprises at least one curvilinear wall (8) formed on the connector external surface (SE2).

8. The conduit (CA) according to any one of claims 1 to 7, wherein the connector external surface (SE2) comprises at least one hooking member (3) radially protrudingly extending.

9. The fluid conduit (CA) according to one of claims 1 to 8, wherein the connector (2) is assembled in the connection end (11) of the piping (1) by a translational movement along the piping axis (X) from upstream to downstream, the free longitudinal end (21a) being radially deformed following assembling of the connector (2) into the connection end (11), previously thermally expanded, the conduit (CA) having an internal surface having a substantially constant internal radius at the interface between the connector (2) and the piping (1).

10. A fluid circuit (C), in particular for an aircraft, comprising at least two conduits (CA) according to claim 9, the connectors (2) of the conduits (CA) being connected by a connecting linkage (R).

11. A method for assembling a conduit (CA) according to any of claims 1 to 9, the method comprising:
- a step of hot preforming (E1) the connection end (11) of the piping (1) so as to expand it radially,
- a step of inserting (E2) the connecting portion (21) of the connector (2) into the connection end (11) of the piping (1),
- a step of radially deforming (E3), when cooling the connection end (11) of the piping (1), the free longitudinal end (21a) so that the conduit (CA) has an internal surface having a substantially constant internal radius at the interface between the connector (2) and the piping (1).
